# EUROPEAN PATENT SPECIFICATION

(11) **EP 2 559 122 B1**
(45) Date of publication and mention of the grant of the patent: **01.04.2015**
(21) Application number: 11718313.7
(22) Date of filing: 18.04.2011
(51) Int. Cl.: H02B 1/36

(54) **LOCKING MECHANISM FOR A DRAWER UNIT IN AN ELECTRICAL CABINET**
SPERRMECHANISMUS FÜR EINE SCHUBLADENEINHEIT IN EINEM SCHALTSCHRANK
MÉCANISME DE VERROUILLAGE POUR UNE UNITÉ DE TYPE TIROIR DANS UNE ARMOIRE ÉLECTRIQUE

(30) Priority: 16.04.2010 EP 10160202
(43) Date of publication of application: 20.02.2013
(73) Proprietor: Eaton Industries (Netherlands) B.V., 7559 SC Hengelo (NL)
(72) Inventor: EVERINK, Jacobus, NL-7623 CN Borne (NL)
(74) Representative: Eaton IP Group EMEA
(86) International application number: PCT/EP2011/056100
(87) International publication number: WO 2011/128457

(56) References cited:
- DE-A1- 2 515 164

## Description

### Field of the invention

The present invention relates to a locking mechanism for locking a drawer unit in one of multiple fixed positions relative to a divider plate in an electrical cabinet.

### Prior art

In electrical cabinets, e.g. as used for motor control centers, multiple drawer units can be present which comprise electronic modules and wiring for controlling machines, such as motors, heaters, etc. in an industrial environment. The drawer units contact bus bars in the electrical cabinet, e.g. for connection to a three phase power supply system. For testing purposes, a drawer unit may be partially retracted from the cabinet, such that the electrical connection with the bus bars is interrupted, and the components in the drawer unit can be safely inspected or tested.

An example of such prior art is disclosed in document DE2515164.

### Summary of the invention

The present invention seeks to provide a simple mechanism which allows to positively securing a drawer unit in a test position (or other position) in the electrical cabinet, such that a technician can safely inspect or test the drawer unit components.

According to the present invention, a locking mechanism according to the preamble defined above is provided, comprising a mechanism frame comprising a base plate, a mounting flange comprising a guiding slot, and two guiding flanges, an operating frame connected to the mechanism frame using a mounting mechanism allowing mutual movement along a first axis, a locking member having a locking element extending through the guiding slot in operation and being positioned between the guiding flanges for movement along a second axis at an angle (e.g. perpendicular) to the first axis, the locking member being slidably connected to the operating frame using a translation mechanism for translating the movement of the operating frame along the first axis to a movement of the locking member along the second axis. The mounting flange and guiding flanges may extend substantially perpendicular to the base plate.

This embodiment allows to implement a locking mechanism with a low number of elements, which requires only very little space for integration into a drawer unit.

In an embodiment, the mounting mechanism comprises an elongated slot extending along the first axis and two fixing elements extending through the elongated slot. The elongated slot may be composed of more, e.g. two, slots, to allow the mechanism frame and operating frame to move with respect to each other in a linear manner along the first axis.

In an embodiment of the present invention, the translation mechanism comprises a longitudinal slit in a plane parallel to the base plate, the longitudinal slit extending at an angle to the first and second axis (e.g. 45°), and a follower element extending through the longitudinal slit, the follower element being in sliding contact with the longitudinal slit. The slot may be provided in the operating mechanism and the follower element may be attached to the locking member, or vice versa, and provide an efficient implementation to change the movement along the first axis into a movement along the second axis.

The locking mechanism comprises a resilient member in a further embodiment, connected between the mechanism frame and the operating frame for providing a force between the mechanism frame and the operating frame along the first axis. This element forces the locking mechanism into a rest situation, e.g. where the locking element is extended.

In a particular embodiment, the operating frame comprises a spring flange extending at an angle (e.g. perpendicular) to the surface of the operating frame, and the resilient member comprises a coil spring around a connecting bar mounted between the spring flange and one of the guiding flanges. This implementation is easy to assemble using a low number of parts. In an alternative embodiment, the operating frame comprises an opening with a first extending element extending in the opening, and the mechanism frame comprises a corresponding opening with a second extending element extending in the corresponding opening, and the resilient member being mounted between the first and second extending elements. This implementation requires even less space and less parts.

The operating frame comprises an actuation flange in a further embodiment, extending at an angle (e.g. perpendicular) to the surface of the operating frame. The actuating element is arranged to provide contact for an actuating element and may comprise a number of parts, which allow actuation from a front panel of a drawer unit.

In a further aspect, the present invention relates to a drawer unit comprising a locking mechanism according to any one of the present embodiments, wherein the operating frame of the locking mechanism is operable from a front side of the drawer unit, and the locking mechanism is attached to the drawer unit. The actuating element may comprise a handle with a shifting knob and an extending member touching the operating frame, or in an alternative embodiment, the actuating element comprises a push button with an extending member touching the operating frame in operation.

In an even further aspect, the present invention relates to an electrical cabinet comprising a plurality of divider plates for receiving a plurality of drawer units according to the present invention embodiments, one or more of the plurality of divider plates being provided with one or more (e.g. three) apertures to accommodate the locking element of a locking mechanism of an associated drawer unit. This allows the drawer unit to be securely fixed into one or more of a connect position, a test position, a disconnect position, or an out position.

### Short description of drawings

The present invention will be discussed in more detail below, using a number of exemplary embodiments, with reference to the attached drawings, in which
Fig. 1a shows a plan view of a mechanism frame forming part of a locking mechanism according to an embodiment of the present invention;
Fig. 1b shows a plan view of an operating frame forming part of a locking mechanism according to an embodiment of the present invention;
Fig. 1c shows a plan view of a locking member forming part of a locking mechanism according to an embodiment of the present invention;
Fig. 2 shows a side view of a locking mechanism according to an embodiment of the present invention is assembled state;
Fig. 3 shows a side view of a locking mechanism according to a further embodiment of the present invention;
Fig. 4a shows a side view of a locking mechanism mounted in a drawer unit in a locking position;
Fig. 4b shows a side view of a locking mechanism mounted in a drawer unit in an unlocked position; and
Fig. 5 shows an exemplary embodiment of three stacked drawer units, locked in different position in an electrical cabinet.

### Detailed description of exemplary embodiments

According to the present invention embodiments, a locking mechanism 10 is provided in the form of a simple mechanism which allows to positively secure a drawer unit 20 in a test position (or other position) in an electrical cabinet, such that a technician can safely inspect or test the drawer unit components. To position the drawer unit 20, which is slidable into or out of the electrical cabinet, and to actuate the locking mechanism, only the front side of the drawer unit 20 (i.e. the operating panel) is useable and accessible in operation.

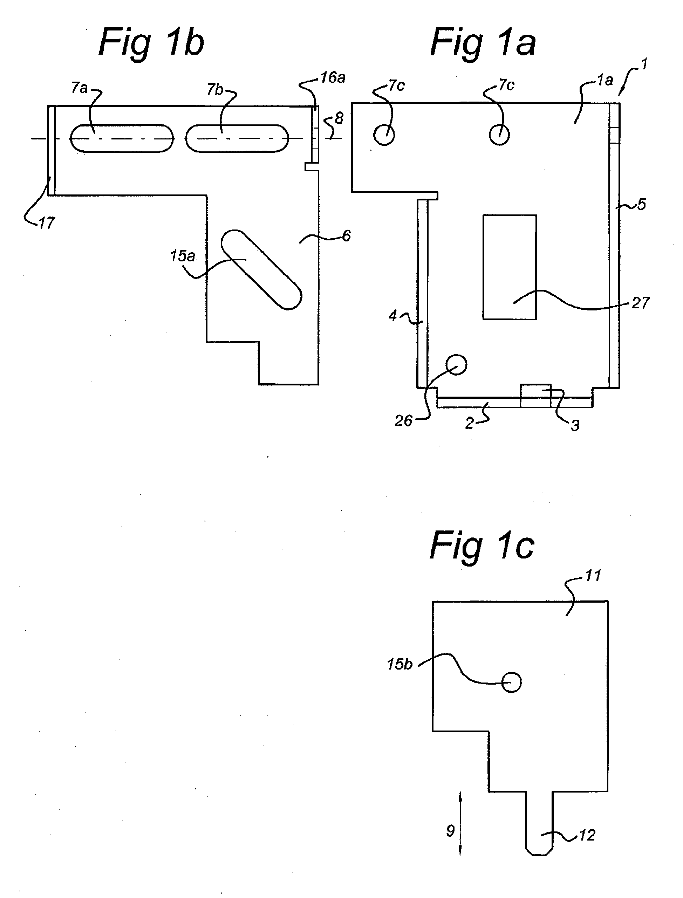

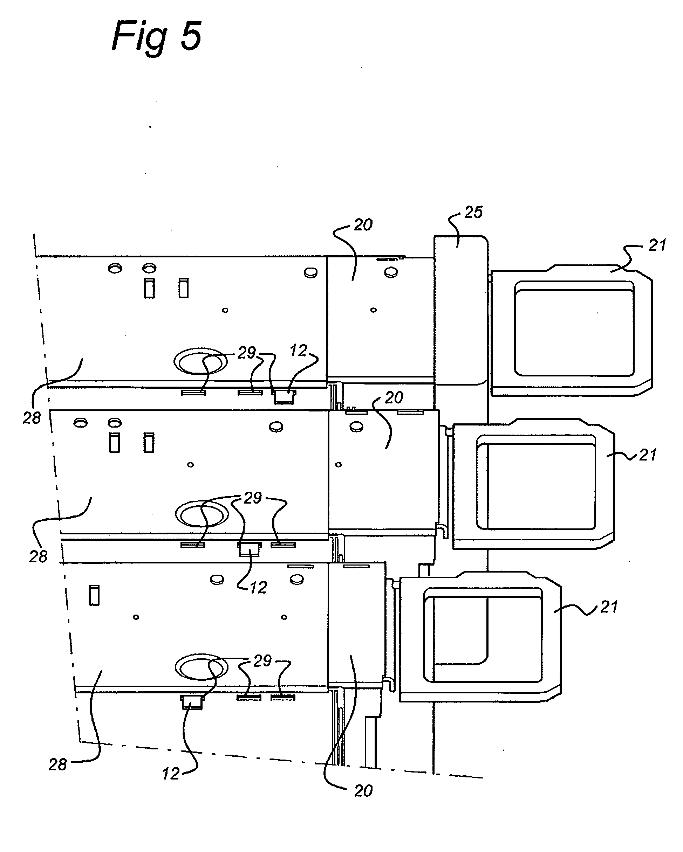

To obtain the desired function, a locking mechanism 10 is provided for locking a drawer unit 20 in one of multiple fixed positions relative to a drawing unit holder (or dividing plate 28) in an electrical cabinet (see also description of Fig. 5 below). The locking mechanism 10 comprises three main elements: a mechanism frame 1, as shown in a planar view in Fig. 1a, an operating frame 6, as shown in a planar view in Fig. 1b, and a locking member 11, as shown in a planar view in Fig. 1c.

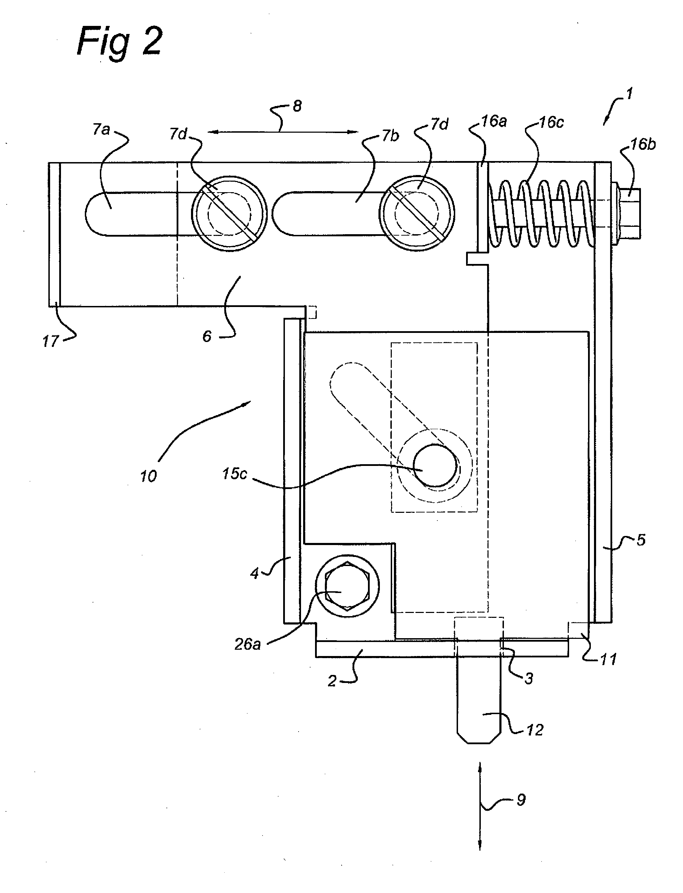

The mechanism frame 1 (Fig. 1a) comprises a base plate 1a, a mounting flange 2 comprising a guiding slot 3, and two guiding flanges 4, 5, the mounting flange 2 and guiding flanges 4, 5 extending substantially perpendicular to the base plate 1a of the mechanism frame 1. Furthermore, in this embodiment, the mounting frame 1 is provided with a mounting hole 26, which may be used to mount the locking mechanism 10 to a side wall of a drawer unit 20, e.g. using a bolt 26a (see e.g. Fig. 2). In an alternative embodiment, the mounting flange 2 is provided with mounting holes to mount the locking mechanism 10 to a base plate 1a of a drawer unit 20.

The operating frame 6 (Fig. 1b) is in operation connected to the mechanism frame 1 using a mounting mechanism 7a-7d allowing mutual movement along a first axis 8.

The locking member 11 (Fig. 1c) has a locking element 12, which in operation extends through the guiding slot 3 of the mechanism frame 1. The locking member 11 is positioned between the guiding flanges 4, 5 for movement along a second axis 9 at an angle (e.g. perpendicular) to the first axis 8. The locking member 11 is slidably connected to the operating frame 6 using a translation mechanism 15a-15c for translating the movement of the operating frame 6 along the first axis 8 to a movement of the locking member 11 along the second axis 9.

Fig. 2 shows a side view of an embodiment of a complete locking mechanism 10 according to the present invention, wherein the main parts 1,6, 11 of Fig. 1a-1c are assembled. Visible in the drawing are the mechanism frame 1, the operating frame 6 and the locking member 11, and the perpendicular axes 8, 9 as explained above. In the view of Fig. 2 the locking mechanism 10 is in a rest position, where the locking element 12 extends from the slot 3 in the mounting frame 1.

According to the present invention embodiments, a very easy to assemble locking mechanism 10 is provided comprising very few parts, and with very limited dimensions, allowing easy assembly in a drawer unit 20.

In the embodiment as shown in Fig. 1b and Fig. 2, the mounting mechanism comprises two elongated slots 7a, 7b extending along the first axis 8 and two fixing elements 7d extending through the elongated slots 7a, 7b. In an alternative embodiment, one single elongated slot is provided, wherein both fixing elements 7d can be slidably mounted. The slots 7a, 7b can be provided in the operating frame 6 and the two fixing elements 7d may be attached to the mounting frame 1 via corresponding apertures 7c (e.g. using a screw thread), as indicated in Fig. 1a. Alternatively, the slots 7a, 7b may be provided in the mechanism frame 1, and the fixing elements 7d may be attached to the operating frame 6. The fixing element 7d may be formed by a bolt, having a head with a diameter larger than the width of the elongated slots 7a, 7b, and a screw thread part for attachment in the apertures 7c of the mounting frame 1.

As more clearly seen in the detail views of Fig. 1a-1c, the translation mechanism comprises a longitudinal slit 15a in a plane parallel to the base plate 1a (or more general in the plane of the (generally flat) locking mechanism 10), extending at an angle to the first and second axis 8, 9, e.g. 45°. Furthermore, as shown in the side view of Fig. 2, a follower element 15c is provided which can slide in the longitudinal slit 15a. i.e. the follower element is in sliding contact with the longitudinal slit 15c. The follower element 15c extends through the longitudinal slit 15c, in an implementation similar to the mounting mechanism 7a-7d between the operational frame 6 and the mounting frame 1 (i.e. using a screw thread attachment to aperture 15b in locking element 11, see Fig. 1c). As indicated in the embodiment of Fig. 1b and 2, the longitudinal slit is provided in the operating frame 6, while the follower element 15c is fixedly attached to the locking member 11. Alternatively, the longitudinal slit 15a is provided in the locking element 11, and the follower element 15c is attached to the operating frame 6.

When assembled, a movement of the operating frame 6 in the allowed direction with regard to the mechanism frame 1 to which it is connected, also results in a movement of the longitudinal slit 15a.in the first axis 8 as indicated in Fig. 2. The locking element 11 is held in sliding contact with the operating frame 6 by means of the translation mechanism 15a-15c, an by virtue of the guiding flanges 4 and 5 only able to move in the direction of the second axis 9. The longitudinal slit 15a being at an angle to the first and second axis 8, 9 in co-operation with the follower element 15c assures that a movement of the operating frame 6 along first axis 8 is translated into a movement of the locking element 11 along the second axis 9. When the longitudinal slit 15a is at an angle of 45°, the amount of movement of the operating frame 6 is the same as the amount of movement of the locking element 11.

To force the locking mechanism into a locking position, wherein the locking element 12 extends through the guiding slot 3, a resilient member 16c is provided which is connected to the mechanism frame 1 and the operating frame 6 for providing a force between the mechanism frame 1 and the operating frame 6 along the first axis 8.

In the embodiment shown in Fig. 1 and 2, the operating frame 6 comprises a spring flange 16a extending at an angle to the surface of the operating frame 6 (e.g. parallel to one of the guiding flanges 4, 5), and the resilient member 16c comprises a coil spring around a connecting bar 16b mounted between the spring flange 16a and the one of the guiding flanges 5.

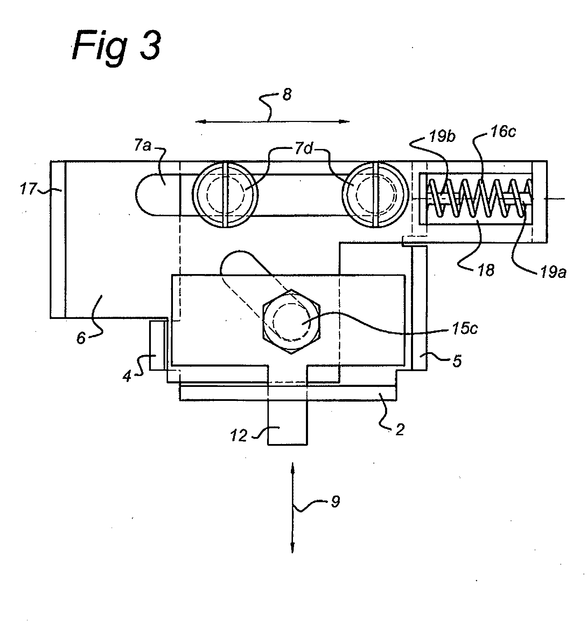

In an alternative embodiment the resilient member is implemented differently, as shown in the side view of Fig. 3. Here, the operating frame 6 comprises an opening 18 with a first extending element 19a extending in the opening 18, and the mechanism frame 1 comprises a corresponding opening with a second extending element 19b extending in the corresponding opening. The resilient member, in the example as drawn again a coil spring 16c, is mounted between the first and second extending elements 19a, 19b.

In the embodiment shown in Fig. 1 and 2, the translation mechanism comprises the longitudinal slot 15a, and a follower element 15c connected to the locking member 11, e.g. using aperture or mounting hole 15b. To accommodate the end of the follower element 15a, the mechanism frame 1 is provided with a (rectangular) opening 27 (see Fig. 1c). In a further embodiment, the mechanism frame 1 has a thickness of at least the length of the follower element 15c which extends from the surface of the locking member 11, e.g. 3mm. This enables a flush mounting of the locking mechanism 10 in a drawer unit, without impeding movement of the locking mechanism parts.

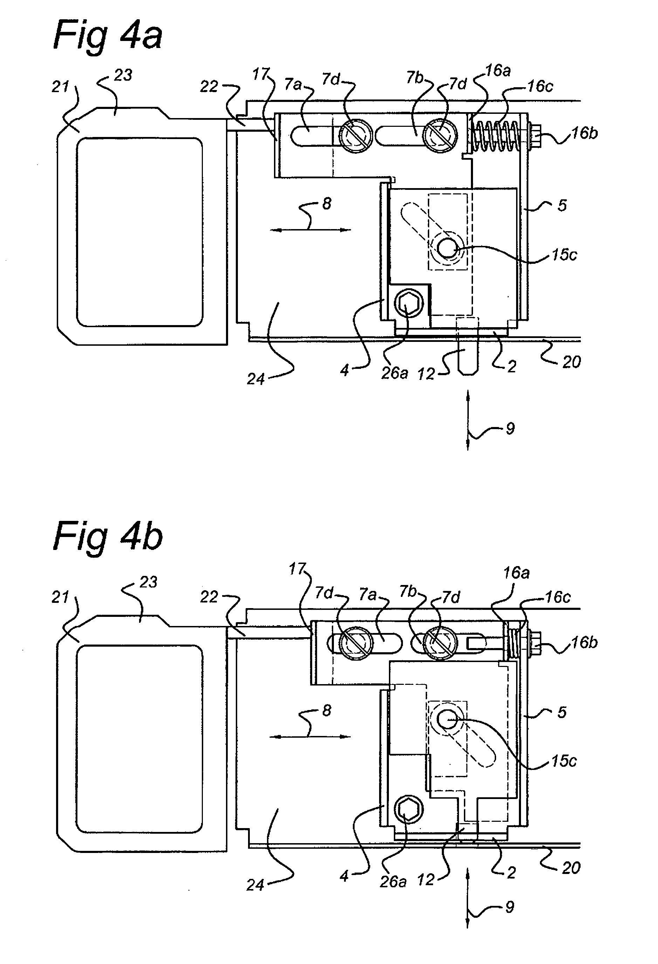

A further element of the operating frame 6 is an actuation flange 17, extending at an angle (e.g. perpendicular) to the surface of the operating frame 6. The actuation flange 17 is arranged to provide contact for an actuating element. Fig. 4a and 4b provide a side view of an embodiment of the locking mechanism 10 installed in a drawer unit 20. The locking mechanism 10 is attached to the drawer unit 20 using the mechanism frame 1. The locking mechanism 10 is mounted to a side wall 24 of the drawer unit 20, and the first and second axes 8, 9 are flush with the side wall 24. The drawer unit 20 further includes a handle 21 provided with a shifting knob 23. The shifting knob 23 is operationally connected to an extending member 22 to form the actuating element. Fig. 4a show the locking element in its resting position, i.e. with the coil spring 16c extended, and the locking member 11 in it slower position. In this view the locking element 12 is visible, as it extends through the mounting flange 2 of the mechanism frame 1, and through the bottom plate of the drawer unit 20. Fig. 4b shows the situation when the shifting knob 23 is operated: the actuating element 22 extends from the handle 21, pushing the actuating flange 17 of the operating frame along the first axis 8. The coil spring 16c is now contracted, and the translation mechanism has moved the locking member 11 upward along the second axis 9. Now, a part of the locking element 12 is visible above the mounting flange 2 of the mounting frame 1, but no longer extends through the bottom plate of the drawer unit 20.

In the embodiment shown in Fig. 4a and 4b, a drawer unit is shown comprising a locking mechanism 10 according to one of the embodiments described above. The operating frame 6 of the locking mechanism 10 is operable from a front side of the drawer unit 20 (i.e. using the handle 21). In an alternative embodiment, the actuating element comprises a push button with an extending member (similar to extending member 22 of Fig. 4a and 4b) which touches the actuating flange 17 of the operating frame 6 in operation.

Fig. 5 shows a side view of three drawer units 20 stacked above each other using three divider plates 28 (or drawer unit holders), as if they were installed in an electrical cabinet. Each drawer unit 20 is visible only in part, together with associated handle 21 and (for the top drawer unit) a front panel 25. The divider plates 28 are provided with one or more apertures 29 suitable for accommodating the locking element 12 of a locking mechanism 10 installed in the associated drawer unit 20. In the embodiment shown in Fig. 5, three apertures 29 are provided, in order to lock the drawer unit 20 in one of three positions: completely pushed into the electrical cabinet (connect position), a test position in which the bus bar connections are interrupted, but other (test and control) connections are still connected; and a disconnect position wherein all electrical connection of the drawer unit 20 are interrupted. In addition, the drawer unit 20 can be further taken out to an out position (fully retracted and accessible).

## Claims

1. Locking mechanism for locking a drawer unit (20) in one of multiple fixed positions relative to a divider plate (28) in an electrical cabinet,
comprising
a mechanism frame (1) comprising a base plate (1a), a mounting flange (2) comprising a guiding slot (3), and two guiding flanges (4, 5),
an operating frame (6) connected to the mechanism frame (1) using a mounting mechanism (7a-7d) allowing mutual movement along a first axis (8),
a locking member (11) having a locking element (12) extending through the guiding slot (3) in operation and being positioned between the guiding flanges (4, 5) for movement along a second axis (9) at an angle to the first axis (8), the locking member (11) being slidably connected to the operating frame (6) using a translation mechanism (15a-15c) for translating the movement of the operating frame (6) along the first axis (8) to a movement of the locking member (11) along the second axis (9).

2. Locking mechanism according to claim 1, wherein the mounting mechanism (7a-7d) comprises an elongated slot (7a, 7b) extending along the first axis (8) and two fixing elements (7d) extending through the elongated slot (7a, 7b).

3. Locking mechanism according to claim 1 or 2, wherein the translation mechanism (15a-15c) comprises a longitudinal slit (15a) in a plane parallel to the base plate (1a), the longitudinal slit (15a) extending at an angle to the first and second axis (8, 9), and a follower element (15c) extending through the longitudinal slit (15a), the follower element (15c) being in sliding contact with the longitudinal slit (15a).

4. Locking mechanism according to any one of claims 1-3, further comprising a resilient member (16c) connected to the mechanism frame (1) and the operating frame (6) for providing a force between the mechanism frame (1) and the operating frame (6) along the first axis (8).

5. Locking mechanism according to any one of claims 1-4, wherein the operating frame (6) comprises a spring flange (16a) extending at an angle to the surface of the operating frame (6), and the resilient member comprises a coil spring (16c) around a connecting bar (16b) mounted between the spring flange (16a) and one of the guiding flanges (4, 5).

6. Locking mechanism according to any one of claims 1-4, wherein the operating frame (6) comprises an opening (18) with a first extending element (19a) extending in the opening (18), and the mechanism frame (1) comprises a corresponding opening (18) with a second extending element (19b) extending in the corresponding opening (18), and the resilient member (16c) being mounted between the first and second extending elements (19a, 19b).

7. Locking mechanism according to any one of claims 1-6, wherein the operating frame (6) further comprises an actuation flange (17), extending at an angle to the surface of the operating frame (6).

8. Drawer unit comprising a locking mechanism (10) according to any one of claims 1-7, wherein the operating frame (6) of the locking mechanism (10) is operable from a front side of the drawer unit (20), and the locking mechanism is attached to the drawer unit.

9. Electrical cabinet comprising a plurality of divider plates (28) for receiving a plurality of drawer units (20) according to claim 8, one or more of the plurality of divider plates (28) being provided with one or more apertures (29) to accommodate the locking element (12) of a locking mechanism (10) of an associated drawer unit (20).

## Patentansprüche

1. Arretiermechanismus zum Arretieren einer Schubladeneinheit (20) in einer von einer Vielzahl fixierter Positionen im Verhältnis zu einer Trennplatte (28) in einem Schaltschrank, umfassend
einen Mechanismusrahmen (1) umfassend eine Grundplatte (1a), einen Befestigungsflansch (2) umfassend einen Führungsschlitz (3), und zwei Führungsflansche (4, 5),
einen Betätigungsrahmen (6) verbunden mit dem Mechanismusrahmen (1) unter Verwendung eines Befestigungsmechanismus (7a-7d), was eine gegenseitige Bewegung entlang einer ersten Achse (8) ermöglicht,
ein Arretierteil (11) mit einem Arretierelement (12), welches sich in Betrieb durch den Führungsschlitz (3) erstreckt und zwischen den Führungsflanschen (4, 5) angeordnet ist, für ein Bewegen entlang einer zweiten Achse (9) in einem Winkel zur ersten Achse (8), wobei das Arretierteil (11) verschiebbar mit dem Betätigungsrahmen (6) unter Verwendung eines Übertragungsmechanismus (15a-15c) verbunden ist, zum Übertragen der Bewegung des Betätigungsrahmens (6) entlang der ersten Achse (8) auf eine Bewegung des Arretierteils (11) entlang der zweiten Achse (9).

2. Arretiermechanismus nach Anspruch 1, wobei der Befestigungsmechanismus (7a-7d) einen verlängerten Schlitz (7a, 7b), welcher sich entlang der ersten Achse (8) erstreckt, und zwei Fixierelemente (7d), welche sich durch den verlängerten Schlitz (7a, 7b) erstrecken, umfasst.

3. Arretiermechanismus nach Anspruch 1 oder 2, wobei der Übertragungsmechanismus (15a-15c) einen Längsschlitz (15a) in einer Ebene parallel zur Grundplatte (1a), wobei der Längsschlitz (15a) sich in einem Winkel zur ersten und zweiten Achse (8, 9) erstreckt, und ein sich durch den Längsschlitz (15a) erstreckendes Mitnehmerelement (15c), wobei das Mitnehmerelement (15c) sich in Schiebekontakt mit dem Längsschlitz (15a) befindet, umfasst.

4. Arretiermechanismus nach einem der Ansprüche 1 bis 3 weiterhin umfassend ein elastisches Teil (16c), welches mit dem Mechanismusrahmen (1) und dem Betätigungsrahmen (6) verbunden ist, zum Bereitstellen einer Kraft zwischen dem Mechanismusrahmen (1) und dem Betätigungsrahmen (6) entlang der ersten Achse (8).

5. Arretiermechanismus nach einem der Ansprüche 1 bis 4, wobei der Betätigungsrahmen (6) einen Federflansch (16a) umfasst, welcher sich in einem Winkel zur Oberfläche des Betätigungsrahmens (6) erstreckt, und das elastische Teil eine Spiralfeder (16c) um eine Verbindungsschiene (16b) herum umfasst, welcher zwischen dem Federflansch (16a) und einem der Führungsflansche (4, 5) befestigt ist.

6. Arretiermechanismus nach einem der Ansprüche 1 bis 4, wobei der Betätigungsrahmen (6) eine Öffnung (18) mit einem ersten ausgestreckten Element (19a) umfasst, welches sich in die Öffnung (18) erstreckt, und der Mechanismusrahmen (1) eine entsprechende Öffnung (18) mit einem zweiten ausgestreckten Element (19b) umfasst, welches sich in die entsprechende Öffnung (18) erstreckt, und das elastische Teil (16c) zwischen den ersten und zweiten ausgestreckten Elementen (19a, 19b) befestigt ist.

7. Arretiermechanismus nach einem der Ansprüche 1 bis 6, wobei der Betätigungsrahmen (6) weiterhin einen Betätigungsflansch (17) umfasst, der sich in einem Winkel zur Oberfläche des Betätigungsrahmens (6) erstreckt.

8. Schubladeneinheit umfassend einen Arretiermechanismus (10) nach einem der Ansprüche 1 bis 7, wobei der Betätigungsrahmen (6) des Arretiermechanismus (10) von einer Vorderseite der Schubladeneinheit (20) aus betreibbar ist und der Arretiermechanismus an der Schubladeneinheit befestigt ist.

9. Schaltschrank umfassend eine Vielzahl von Trennplatten (28) zum Aufnehmen einer Vielzahl von Schubladeneinheiten (20) nach Anspruch 8, wobei eine oder mehrere der Vielzahl von Trennplatten (28) mit einem oder mehreren Aperturen (29) versehen sind, um das Arretierelement (12) eines Arretiermechanismus (10) einer zugehörigen Schubladeneinheit (20) aufzunehmen.

## Revendications

1. Mécanisme de verrouillage pour le verrouillage d'une unité de tiroir (20) dans l'une de multiples positions fixes par rapport à une plaque de division (28) dans une armoire électrique, comprenant :
un châssis de mécanisme (1) comprenant une plaque de base (1a), un bord de montage (2) comprenant une fente de guidage (3) et deux bords de guidage (4, 5),
un châssis de travail (6) raccordé au châssis de mécanisme (1) utilisant un mécanisme de montage (7a-7d) permettant un mouvement mutuel le long d'un premier axe (8),
un organe de verrouillage (11) ayant un élément de verrouillage (12) s'étendant à travers la fente de guidage (3) en service et positionné entre les bords de guidage (4, 5) pour un mouvement le long d'un second axe (9) sous un certain angle par rapport au premier axe (8), l'organe de verrouillage (11) étant raccordé à coulissement au châssis de travail (6) en utilisant un mécanisme de conversion (15a-15c) pour convertir le mouvement du châssis de travail (6) le long du premier axe (8) en un mouvement de l'organe de verrouillage (11) le long du second axe (9).

2. Mécanisme de verrouillage selon la revendication 1, dans lequel le mécanisme de montage (7a-7d) comprend une fente allongée (7a, 7b) s'étendant le long du premier axe (8) et deux éléments de fixation (7d) s'étendant à travers la fente allongée (7a, 7b).

3. Mécanisme de verrouillage selon la revendication 1 ou la revendication 2, dans lequel le mécanisme de conversion (15a-15c) comprend une fente longitudinale (15a) dans un plan parallèle à la plaque de base (1a), la fente longitudinale (15a) s'étendant sous un certain angle avec le premier et le second axe (8, 9) et un élément suiveur (15c) s'étendant à travers la fente longitudinale (15a), l'élément suiveur (15c) étant en contact coulissant avec la fente longitudinale (15a).

4. Mécanisme de verrouillage selon l'une quelconque des revendications 1 à 3, comprenant en outre un élément élastique (16c) raccordé au châssis de mécanisme (1) et au châssis de travail (6) pour appliquer une force entre le châssis de mécanisme (1) et le châssis de travail (6) le long du premier axe (8).

5. Mécanisme de verrouillage selon l'une quelconque des revendications 1 à 4, dans lequel le châssis de travail (6) comprend une bride à ressort (16a) s'étendant sous un certain angle avec la surface du châssis de travail (6) et l'élément élastique comprend un ressort hélicoïdal (16c) autour d'une barre de jonction (16b) montée entre la bride à ressort (16a) et l'un des bords de guidage (4, 5).

6. Mécanisme de verrouillage selon l'une quelconque des revendications 1 à 4, dans lequel le châssis de travail (6) comprend une ouverture (18) avec un premier élément d'extension (19a) s'étendant dans l'ouverture (18) et le châssis de mécanisme (1) comprend une ouverture correspondante (18) avec un second élément d'extension (19b) s'étendant dans l'ouverture correspondante (18), l'élément élastique (16c) étant monté entre le premier et le second élément d'extension (19a, 19b).

7. Mécanisme de verrouillage selon l'une quelconque des revendications 1 à 6, dans lequel le châssis de travail (6) comprend en outre une bride d'actionnement (17) s'étendant sous un certain angle avec la surface du châssis de travail (6).

8. Unité de tiroir comprenant un mécanisme de verrouillage (10) selon l'une quelconque des revendications 1 à 7, dans laquelle le châssis de travail (6) du mécanisme de verrouillage (10) peut opérer à partir d'un côté frontal de l'unité de tiroir (20) et le mécanisme de verrouillage est fixé à l'unité de tiroir.

9. Armoire électrique comprenant une pluralité de plaques de division (28) pour recevoir une pluralité d'unités de tiroir (20) selon la revendication 8, une ou plusieurs de la pluralité de plaques de division (28) étant pourvue(s) d'une ou plusieurs ouvertures (29) pour recevoir l'élément de verrouillage (12) d'un mécanisme de verrouillage (10) d'une unité de tiroir associée (20).
